# EUROPÄISCHE PATENTSCHRIFT

(11) **EP 2 332 879 B1**
(45) Veröffentlichungstag und Bekanntmachung des Hinweises auf die Patenterteilung: **16.01.2013**
(21) Anmeldenummer: 10191598.1
(22) Anmeldetag: 17.11.2010
(51) Int. Cl.: B29D 22/00, B29D 22/02, B66F 3/35

(54) **Hebekissen aus in einer Presse heißvulkanisiertem, bahnförmigen Gummimaterial und Verfahren zu seiner Herstellung**
Lifting bag of web-like rubber material hot-vulcanized in a press and method for its production
Coussin de levage constitué de matériau en caoutchouc en forme de bande, vulcanisé à chaud dans une presse et son procédé de fabrication

(30) Priorität: 09.12.2009 DE 102009047758
(43) Veröffentlichungstag der Anmeldung: 15.06.2011
(73) Patentinhaber: Vetter GmbH, 53909 Zülpich (DE)
(72) Erfinder: Bonus, Egon, 53925, Kall (DE)
(74) Vertreter: Bauer Vorberg Kayser Patentanwälte

(56) Entgegenhaltungen:
- WO-A1-94/26649
- US-A- 4 143 854
- US-A- 4 643 398

## Beschreibung

Die Erfindung bezieht sich auf ein Hebekissen aus in einer Presse heißvulkanisiertem, bahnförmigen Gummimaterial, das eine innenliegende Blase, die einen Nippel hat, über den ein Innenraum der Blase zugänglich ist, und eine außerhalb dieser Blase befindliche und die Blase eng umschließende Hülle aus armiertem Gummimaterial aufweist, die Hülle hat einen Durchlass für den Nippel.

Ein derartiges Hebekissen ist aus der US 4,643,398 bekannt. Bei diesem Hebekissen sind Blase und Hülle fest miteinander verbunden, das Hebekissen ist in einem einzigen Heißvulkanisierschritt hergestellt.

Weiterhin bezieht sich die Erfindung auf ein Verfahren zum Herstellen eines derartigen Hebekissens, bei dem vorbekannten Hebekissen nach der US 4,643,398 erfolgt die Herstellung in einem einzigen Verfahrensschritt durch Vulkanisieren in einer Presse.

Zum Stand der Technik wird noch auf EP 40578 A1; US 4,036,472; US 4,143,854 und FR 2 305 381 verwiesen. Aus diesen Dokumenten und aus dem eingangs genannten Dokument sind wichtige Fachbegriffe, Herstellungsverfahren, Materialien, Einsatzzwecke und Aufbau eines Hebekissens der hier in Rede stehenden Art bekannt. Zumindest insoweit werden diese Dokumente inn das vorliegenden Verfahren einbezogen.

Nach dem Stand der Technik werden zur Herstellung des Hebekissens die Zuschnitte für die Blase und die Teile der Hülle zusammengestellt und in die Presse eingelegt. Erst durch den Heißvulkanisiervorgang verbinden sich die überlappenden Bereiche der Blase und der Teile der Hülle zu einem luftdichten Ganzen. Wie sich insbesondere aus der EP 1 579 47 B1 ergibt, muss bei dem Herstellungsvorgang sorgfältig darauf geachtet werden, dass die Verbindung über die gesamte Fläche des Kissens erfolgt und insbesondere weder zwischen der Blase noch den Teilen der Hülle sich Luftkammern oder -blasen bilden.

Im praktischen Betrieb wird das Hebekissen hohen Belastungen ausgesetzt. Es wird üblicherweise mit Luft im Bereich von beispielsweise 8 bar gefüllt. Dabei treten hohe Spannungen in der Wandung des Kissens auf. Dies führt zu erheblichen Belastungen. Erfahrungsgemäß wird der Berstdruck der Hebekissen mit zunehmender Anzahl der Lastwechsel zwischen voll aufgeblasenem Zustand und entleertem Zustand immer geringer. Ein Hebekissen der hier in Rede stehenden Art sollte mindestens 20 000 Hübe aushalten. Der Berstdruck ist dabei etwa 49 bar. Bei längeren Testläufen mit Aufblasen des Hebekissens auf einen Prüfdruck und anschließendes Ablassen hat sich gezeigt, dass in den Wandungen des Hebekissens Fehlstellen, innere Risse, Trennflächen und andere Unregelmäßigkeiten auftreten. Es lasse sich innere, von außen nicht erkennbare Beschädigungen nachweisen, die durch die starke Dehnung der unterschiedlichen Bestandteile der Wandungen des Hebekissens bedingt sind. Bei Tests wird ein Hebekissen insbesondere dadurch stark belastet, dass es frei aufgeblasen wird, dabei dehnt sich die Wandung besonders stark. Wird das Hebekissen dagegen bei einem praktischen Einsatz, beispielsweise in einem Mauerspalt, aufgeblasen, ist die Dehnung nicht so erheblich.

Das Gummimaterial ist vor dem Vulkanisierschritt üblicherweise nicht vulkanisiert, in der Regel ist es unvulkanisiert. Anstelle von Gummimaterial können auch andere Materialien eingesetzt werden, die sich in einer heißen Presse verbinden lassen, insbesondere vulkanisieren lassen. Das Gummimaterialursprünglich liegt ursprünglich bahnförmig vor. Für die Armierung des Gummimaterials werden Armierungsmaterialien, insbesondere Gewebe, verwendet, wie sie auch in der Reifenindustrie üblich sind. Eingesetzt werden z.B. Stahlcord, Kevlar oder andere Kunststofffäden wie Aramid, weiterhin Kohlefasern usw.

Wenn der Berstdruck nach mehreren Testzyklen oder Einsätzen schrittweise kleiner wird, ist irgendwann eine kritische Schwelle erreicht. Ob diese bei einem konkreten Hebekissen bereits erreicht ist, lässt sich von außen ohne besondere Nachweisgeräte nicht feststellen. Ist der Berstdruck stark abgefallen, kann das Hebekissen im normalen Einsatz bersten. Dies kann zu folgenschweren Unfällen führen. Man ist nun daher bestrebt, ein Hebekissen herzustellen, das auch nach einer großen Anzahl von Füllungen und Entleerungen immer noch einen hohen Berstdruck hat, insbesondere den ursprünglichen Berstdruck beibehält. Es besteht der Wunsch nach einem Hebekissen, dessen Wandungen beständiger gegen die hohen Belastungen beim Aufblasen oder Ablassen der Druckluft sind, als dies bei dem Hebekissen nach dem Stand der Technik der Fall ist, sowie nach einem entsprechenden Verfahren zur Herstellung.

Hiervon ausgehend ist es Aufgabe der Erfindung, das Hebekissen der eingangs genannten Art dahingehend weiterzubilden, dass es den hohen Belastungen wiederholter Füll- und Entleerungsvorgänge besser widersteht, dadurch eine höhere Lebensdauer aufweist, mithin seine Wandungen beständiger ausgebildet sind, und ein entsprechendes Verfahren zur Herstellung eines derartigen Hebekissens anzugeben.

Diese Aufgabe wird gelöst durch ein Hebekissen aus in einer Presse heißvulkanisiertem, bahnförmigen Gummimaterial, das eine innenliegende Blase, die einen Nippel hat, über den ein Innenraum der Blase zugänglich ist, und eine außerhalb dieser Blase befindliche und die Blase eng umschließende Hülle aus armiertem Gummimaterial aufweist, dabei hat die Hülle einen Durchlass für den Nippel, die Blase ist in einem ersten Vulkanisierschritt hergestellt, die Hülle ist in einem anschließenden, zweiten Vulkanisierschritt zugefügt und hergestellt, zwischen Hülle und Blase befindet sich ein Trennmittel, die Hülle ist nicht mit der Blase verbunden.

Im Unterschied zum Stand der Technik wird dieses Hebekissen in zwei Einzelschritten eines Vulkanisierverfahrens nacheinander in einer Presse oder zwei verschiedenen Pressen hergestellt. Bei dem Hebekissen nach der Erfindung hat die Blase keine Verbindung, insbesondere keine flächige Verbindung mit der Hülle. Blase und Hülle sind allenfalls im Bereich des Nippels oder in einem kleinen Bereich um den Nippel herum, der sich insbesondere maximal 3 bis 5 cm vom Nippel entfernt erstreckt, verbunden. Bei dem erfindungsgemäßen Hebekissen hat die Blase eine im Wesentlichen konstante Materialdicke. Dies ist bei einem Hebekissen nach dem Stand der Technik nicht erreichbar, weil dort die Blase unmittelbar in die Hülle übergeht und die Materialdicke der Blase nicht überall konstant ist. Bei dem Hebekissen nach der Erfindung lässt sich die Blase optimal für die Bedürfnisse des Hebekissens ausbilden. Sie ist vorzugsweise nicht armiert. Sie kann sich deutlich einfacher ausdehnen als die Hülle. Dies wird insbesondere dadurch erreicht, dass ihre Dehnbarkeit mindestens dreimal, mindestens fünfmal so hoch ist wie die Dehnbarkeit der Hülle.

Die Hülle liegt eng an der Blase an, hat mit ihr aber keine Verbindung. Unter einer engen Anlage wird ein im Wesentlichen flächiger Kontakt über die gesamte Oberfläche, zumindest über 80% der Oberfläche der Blase, ausreichend ist auch eine Anlage über mindestens 50% der Blase, verstanden. Beim erfindungsgemä-βen Hebekissen kann sich beim Aufblasen der Blase die Blase gegenüber der Hülle verschieben. Dadurch werden Spannungen, wie sie beim Hebekissen nach dem Stand der Technik auftreten können, abgebaut.

Als Trennmittel wird ein flüssiges und/oder festes Mittel eingesetzt. Beispielsweise wird eine Folie um die Blase gehüllt, bevor Zuschnitte für die Herstellung der Hülle um die Blase angebracht bzw. gewickelt werden. Durch das Trennmittel soll sichergestellt sein, dass sich im zweiten Vulkanisierschritt die Hülle nicht mit der bereits hergestellten Blase irgendwie verbinden kann. Derartige Trennmittel sind Fachleuten aus dem Bereich der Gummitechnik bekannt. Das Trennmittel kann auch Gleiteigenschaften haben. Unabhängig davon kann es vorteilhaft sein, ein Gleitmittel zwischen Blase und den Zuschnitten für die Hülle einzubringen, damit eine Relativbewegung zwischen Hülle und Blase gefördert wird. Derartige Gleitmittel, die den Vulkanisiertemperaturen Stand halten, sind dem Fachmann aus der Reifenindustrie geläufig.

Die Erfindung wendet sich insbesondere an den Fachmann mit Kenntnissen aus der Reifenindustrie, weil dieser Fachmann die Herstellungsverfahren des Einbettens von Armierungsfäden in Kraftfahrzeugreifen kennt und ähnliche Schritte auch bei den Hebekissen nach der Erfindung durchführen kann. Insoweit besteht eine Übereinstimmung mit einem Autoreifen mit separatem Schlauch, wobei der separate Schlauch die Blase bildet und der Reifen die Hülle bildet. Die Aufgabe der Dichtigkeit ist daher ausschließlich der Blase zugeordnet, die Aufgabe eines hohen Berstdrucks ist der Hülle zugeordnet.

In einer vorzugsweisen Ausführung hat das Hebekissen Rechteckform. Dabei ist der Nippel bevorzugt in einer Ecke und auf einer Diagonallinie angeordnet. Die Anordnung des Nippels in einer Ecke hat sich als günstig erwiesen, weil sich Ecken beim Aufblasen relativ wenig verformen. Es ist aber auch möglich, den Nippel in der Mitte einer Wandung oder in ihrem Randbereich anzuordnen. Letztere Anordnung wird insbesondere von Anwendern verlangt, die die Hebekissen für formgebende Verfahren, zum Beispiel in einer Gussform, einsetzen.

In vorzugsweiser Weiterbildung ist die Hülle nicht vollständig luftdicht. Anders ausgedrückt hat die Hülle mindestens eine kleine Leckstelle. Auf diese Weise wird der Raum zwischen Hülle und Blase nicht luftdicht abgeschlossen. Dadurch ist es möglich, das Kissen im entleerten Zustand sehr flach zu halten. Evtl. Lufteinflüsse zwischen Blase und Hülle entweichen beim Entleeren und/oder beim Aufblasen auf Nenndruck.

In bekannter Weise hat die Blase vorzugsweise keine Armierung. Es ist möglich, die Blase mit einer gewissen Armierung auszustatten. Diese soll aber so gewählt sein, dass die Blase zumindest dreimal leichter gedehnt werden kann als die Hülle.

Vorzugsweise wird die Hülle aus zwei Lagen gebildet, die unterschiedliche Armierungsrichtungen aufweisen. Hier kann man dem Aufbau der Hülle folgen, der beispielsweise aus der EP 157947 B1 bekannt ist.

Bei dem erfindungsgemäßen Verfahren wird zunächst eine vollständige und einsatzfähige Blase hergestellt. Produktion der Blase kann an einem anderen Ort als die Fertigstellung des Kissens erfolgen. Die Blase kann somit ein Zukaufteil sein. Sie hat eine Wandstärke von 0,5 bis 5 mm, die Wandstärke ist dem jeweiligen Einsatzweck angepasst. Die Blase wird üblicherweise aus Zuschnitten aus bahnförmigen, nicht vulkanisiertem Gummimaterial hergestellt, insoweit besteht kein Unterschied zur Herstellung der Blase des Hebekissens im Stand der Technik.

Vor dem zweiten Vulkanisierschritt wird die Blase mit einem Trennmittel umhüllt. Anschließend werden Zuschnitte für eine innere und danach für eine äußere Lage eng um die Blase herum gelegt. Bei diesem Schritt wird darauf geachtet, dass zwischen Blase und den Zuschnitten keine Lufträume freibleiben, jedenfalls keine erheblichen Lufträume. Die Zuschnitte werden so um die Blase herum gelegt, dass sie möglichst überall flächig an der Blase anliegen. Dies gilt insbesondere für eine innere Lage. Eine äußere Lage wird ebenfalls so aufgebracht, dass sie mit ihrer Innenfläche überall anliegt, nämlich im Wesentlichen an der inneren Lage und auch an der noch nicht abgedeckten Oberfläche der Blase. Ein Durchlass für den Nippel ist in der Hülle vorgesehen. Vorzugsweise ist die Hülle am Nippel und/oder in unmittelbarer Umgebung des Nippels mit der Blase verbunden. Sie ist nur dort verbunden. Es ist dadurch sichergestellt, dass sich der Nippel nicht relativ zur Hülle bewegen kann. Vorzugsweise ist an dem Nippel das Material der Hülle anvulkanisiert. Auch hier wird ein Verfahren verwendet, wie es bei dem vorbekannten Hebekissen bereits eingesetzt ist. Der Nippel ist üblicherweise aus Metall hergestellt, es wird eine Gummi-Metallverbindung nach dem Stand der Technik hergestellt. Anstelle von Heißvulkanisieren kann auch ein anders Vulkanisieren erfolgen, z.B. Kaltvulkanisieren. Die Hülle ist vorzugsweise mindestens doppelt so dick wie die Blase. Vorzugsweise ist die Materialdicke von Hülle und/oder Blase konstant und ändert sich allenfalls um den Faktor 1,5, maximal 3.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im Folgenden näher erläutert wird. In dieser Zeichnung zeigen:
Fig. 1: eine perspektivische Darstellung einer Blase und
Fig. 2: eine perspektivische Darstellung der Blase gemäß Fig. 1, die noch nicht vollständig von einer Hülle umschlossen ist, die Hülle ist noch nicht vollständig geschlossen, der zweite Vulkanisierschritt ist noch nicht durchgeführt.

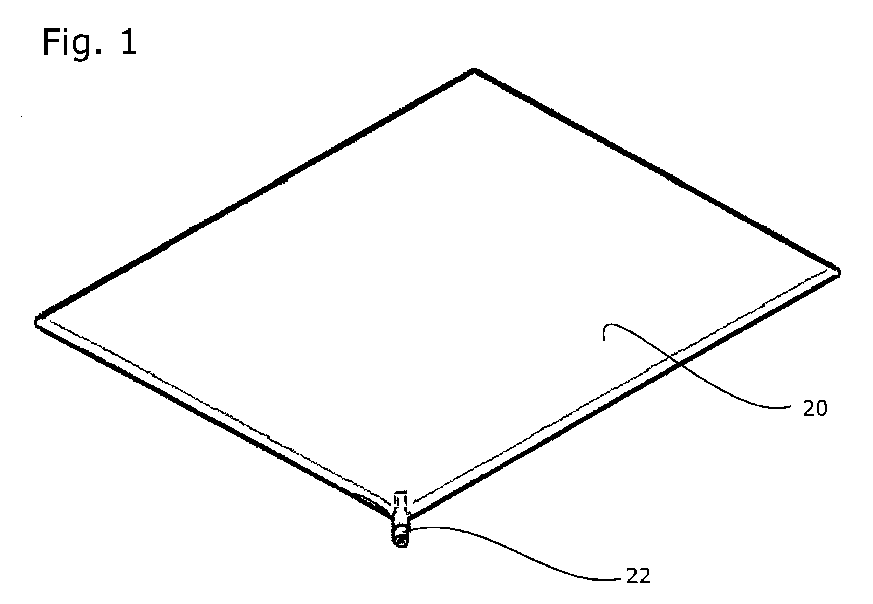

Eine Blase 20 ist aus Naturkautschuk hergestellt, sie besteht im Wesentlichen aus zwei gleich großen Platten, die rechteckförmig sind und unmittelbar aufeinander liegen, und die randseitig ineinander übergehen. Die Wandstärke der Blase ist möglichst konstant, sie liegt bei 3 bis 3,5 mm. Die Blase 20 ist in einem ersten Heißvulkanisierschritt in einer ersten Form hergestellt. Andere Kautschukmaterialien als Naturkautschuk sind möglich, beispielsweise Polymerisate aus konjugierten Dienen sowie Copolymerisate aus konjugierten Dienen und Vinylderivaten. Unter Naturkautschuk werden auch strukturanaloge Synthesekautschuke verstanden. Für die Herstellung der Blase 20, wie in Fig. 1 dargestellt, werden die Ausgangsmaterialien verwendet, wie sie auch bei dem Hebekissen nach dem Stand der Technik für die Herstellung der Blase eingesetzt werden. Soweit wird auf die eingangs genannten Vorveröffentlichungen verwiesen, diese werden vollinhaltlich in vorliegender Anmeldung einbezogen.

Wie im Stand der Technik wird die Blase 20 aus bahnförmig vorliegendem Rohgummimaterial erstellt, das entsprechend zugeschnitten wird. Vorzugsweise wird nur ein Zuschnitt verwendet, es können aber auch mehrere Zuschnitte für die Herstellung der Blase 20 verwendet werden. Der eine Zuschnitt bildet die beiden Platten, die zusammenhängen, und zugleich Überlappungsbereiche in drei Randbereichen, in denen das Material ausgehend von der einen Platte in der Ebene der anderen Platte und auf die andere Platte umgeschlagen wird und mit dieser anderen Platte überlappt. Das Ausgangsmaterial hat eine Materialstärke von etwa 3 bis 3,5 mm. Durch den ersten Vulkanisierschritt wird eine vorzugsweise gleichbleibende Wanddicke erreicht, der Vulkanisierschritt wird entsprechend durchgeführt, dass sich das Material aus den Überlappungsbereichen homogen überall verteilen kann. Der Vulkanisierschritt erfolgt in bekannter Weise in der ersten Form, die auch die Außenform der Blase 20 bestimmt.

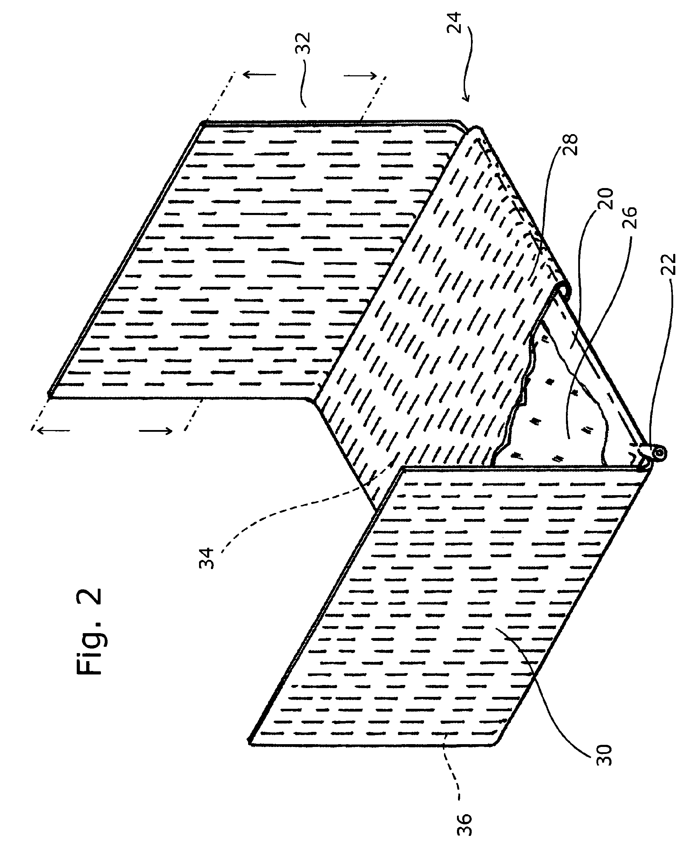

In bekannter Weise ist die Blase 20 mit einem Nippel 22 versehen, dieser ist in einem Eckbereich angeordnet. Nur über ihn ist ein Innenraum der Blase 20 zugänglich. Der Nippel 22 hat beispielsweise ein Außengewinde. Die Anordnung in einer Ecke hat sich bewährt, weil beim Aufblasen sich die Ecken am wenigsten deformieren. Es ist aber auch möglich, den Nippel 22 in einer Platte anzuordnen und z.B. rechtwinklig zu ihr verlaufen zu lassen. In Fig. 1 und 2 ragt der Nippel 22 in Richtung einer Diagonalen der rechteckförmigen Blase 22 nach außen und steht zumindest einige Millimeter, maximal einige Zentimeter vor, beispielsweise 3 bis 7 cm.

Die Blase 20 könnte selbst auch schon als Hebekissen eingesetzt werden. Sie ist nicht armiert. Es besteht daher die Gefahr des Platzens, wenn sie in einem Einsatz sich an mindestens einer Stelle unbegrenzt ausdehnen kann. Die Blase 20 ist einem Schlauch eines mit Schlauch ausgerüsteten Reifens für ein Automobil vergleichbar. Lediglich die Wanddicke ist größer als bei einem Schlauch eines Automobilreifens.

Die Blase 20 kann ähnlich einer Wärmeflasche, wie sie derzeit im praktischen Einsatz ist, hergestellt werden.

Fig. 2 zeigt, wie vor einem zweiten Heißvulkanisierschritt, der in einer zweiten Form erfolgt, die Blase 20 mit einer Hülle 24 schrittweise ummantelt wird. Hierzu wird zunächst ein Trennmittel 26 in Form eines dünnen Blattes, einer Flüssigkeit oder auch in anderer Form, z. B. als Pulver oder Paste, auf die Blase 20 aufgebracht. Verwendet werden Mittel, wie sie auch aus der Reifenindustrie für Kraftfahrzeuge bekannt sind. Ein bekanntes Trennmittel ist beispielsweise Talkum. Dieses hat zugleich den Vorteil, dass es auch ein Gleitmittel zwischen benachbarten Schichten ist.

Durch das Trennmittel 26 wird verhindert, dass sich die Hülle 24 mit der Blase 20 verbinden kann. Eine Verbindung von Hülle 24 und Blase 20 erfolgt ausschließlich im Bereich des Nippels. Der Nippel 22 ist auch mit der Hülle 24, konkret einer Ecke der Hülle 24, verbunden. Nur dort ist er verbunden. Hier findet beim zweiten Vulkanisierschritt eine Verbindung statt. Insbesondere erfolgt diese Verbindung in einem Ringbereich um den Nippel 22 herum bzw. angrenzend an den Nippel 22 im Bereich der Blase 20. Die Verbindung erstreckt sich über eine Ringfläche. Diese ist axial einige Millimeter bis vorzugsweise nur 2 cm lang. Dadurch wird vermieden, dass der Nippel 22 in die Hülle 24 hineingedrückt werden kann.

Nach Aufbringen des Trennmittels 26 auf alle Flächen der Blase 20, ausgenommen den kurzen Ringbereich in Nähe des Nippels 22 bzw. auf dem Nippel 22 selbst, wird zunächst als erste Lage eine innere Lage 28, aufgebracht. Da die Blase 20 in der gezeigten Ausführung rechteckförmig ist, wird die innere Lage 28 aus einem Zuschnitt hergestellt, der ebenfalls rechteckförmig ist. Er hat im Wesentlichen folgende Abmessungen: Seine Breite entspricht der Länge der der Blase; sein Länge ist um einen Überstand größer ist als die doppelte Breite der Blase 20. Der Überstand wirkt, dass die Endbereiche des übereinandergeschlagenen Zuschnitts innere Lage 28 sich überlappen, beispielsweise über 5 bis 20 cm vorzugsweise 12 bis 18 cm und insbesondere 14 cm überlappen. Bei der inneren Lage 28 gemäß Fig. 1 ist diese Überlappung auf der Unterseite der Blase 20, sie ist in Fig. 1 nicht sichtbar.

Um die innere Lage 28 herum wird nun eine äußere Lage 30 gelegt, die ebenfalls die Blase 20 und auch die innere Lage 28 eng umschließt und übergreift. Auch für die äußere Lage 30 wird ein Zuschnitt verwendet, der Rechteckform hat. Er hat eine Breite, die der Breite der Blase 20 mit etwas Zugabe von ca. 1 bis 5 cm für die innere Lage 28 entspricht, und hat eine Länge, die der doppelten Länge der Blase 20 zzgl. mindestens 10 cm, vorzugsweise bis 25 cm entspricht. Auf diese Weise wird ein Überschlag 32 von mehreren Zentimetern Länge, vorzugsweise ein Überschlag 32 von etwa 14 cm erreicht, der später zu einer Überlappung der beiden Enden des Zuschnitts auf der Oberseite der Blase 20 führt. Die Überlappung der äußeren Lage 30 ist auf der anderen Seite der Blase 20 als die Überlappung der inneren Lage 28. Der Überschlag 32 der äußeren Lage 30 ist in Fig. 2 kenntlich gemacht.

Für die Zuschnitte der inneren Lage 28 und der äußeren Lage 30 wird bahnförmiges, armiertes Gummimaterial, beispielsweise aus Naturkautschuk, verwendet. Für die äußere Lage 30 kann Chloroprenkautschuk, genannt CR, eingesetzt werden. Dieser hat den Vorteil, ölbeständig zu sein. Andere Kautschukmaterialien können je nach Einsatzzweck des Hebekissens verwendet werden. Die Armierung erfolgt durch Armierungsfäden 34, 36. Die Armierungsfäden 34, 36 laufen jeweils in Längenrichtung des Zuschnittes. Mit 34 sind die Armierungsfäden der inneren Lage 28 bezeichnet, mit 36 sind die Armierungsfäden der äußeren Lage 30 bezeichnet. Bei dem gezeigten rechteckförmigen Hebekissen kreuzen sich die Armierungsfäden 34, 36 im Winkel von 90^{º} Grad. In bekannter Weise wird ein Armierungsgewebe verwendet. Hierbei stellen die Armierungsfäden 34, 36 die Kettfäden dar, als Schussfäden werden beliebige einfache Fäden verwendet, beispielsweise aus Baumwolle oder aus einem Baumwolle-Kunststoff-Gemisch. Die letzteren Fäden haben nur die Aufgabe, die Armierungsfäden 34, 36 parallel zu halten und sind im fertigen Hebekissen überflüssig.

Als Armierungsmaterial werden die gängigen Materialien verwendet, wie sie auch nach dem Stand der Technik für Hebekissen eingesetzt werden. In Frage kommen Armierungsfäden 34, 36 aus Stahlcord, aus anderem anorganischem Material oder Kunststofffäden. Entscheidend ist die Reißfestigkeit der Armierungsfäden 34, 36. Ähnliche Probleme liegen auch bei Kraftfahrzeugreifen vor und zuverlässige Angaben hierzu wird der Fachmann beispielsweise bei Gürtelreifen in Erfahrung bringen können und auffinden.

Die Hülle 24 ist nun ausschließlich dafür da, eine gewisse, vorgegebene Ausdehnung des Hebekissens zuzulassen. Die Hülle 24 begrenzt die Ausdehnung der Blase 20 beim Aufblasen. Durch die Hülle 24 wird der Berstdruck bestimmt. Durch die Blase 20 wird die Dichtigkeit des Hebekissens bestimmt.

Die Lagen 28, 30 liegen möglichst eng aneinander bzw. an der Blase 20 an. Die Blase 20 ist der Dichtkörper. Die Hülle 24 ist der Festigkeitsträger. Erfahrungsgemäß hält die Blase 20 nun so lange, bis der Festigkeitsträger Hülle 24 reist. Die Blase 20 ist nun nicht mehr der Schwachpunkt wie im Stand der Technik. Bei Versuchen hat es sich gezeigt, dass nun der Berstdruck des fertigen Hebekissens mit zunehmender Anzahl von Aufblas- und Ablassvorgängen nicht mehr schrittweise abnimmt, sondern auch nach z. B. 20.000 Hüben auf dem Ausgangswert bleibt.

Der Raum zwischen Blase 20 und Hülle 24 ist so gering wie möglich. Am fertigen Hebekissen liegt die innere Lage 28 mit ihrer Innenfläche unmittelbar an der Au-βenseite der Blase 20 an, unter Zwischenschaltung des Trennmittels 26, das Trennmittel 26 ist äußerst flach, es hat eine Materialdicke unter einem Millimeter, vorzugsweise unter 1/10 mm. In den Kanten und Ecken umgeben die Lagen 28 bzw. 30 die Hülle 24 eng, so dass praktisch keine Lufträume zwischen Hülle 24 und Blase 20 vorliegen. Das Luftvolumen zwischen Hülle 24 und Blase 20 ist kleiner als 1%, vorzugsweise kleiner als 0,1% und insbesondere kleiner als 0,01% des Füllvolumens des Hebekissens.

Die Hülle 24 ist nach außen hin nicht dicht. Dadurch ist der Raum zwischen Blase 20 und Hülle 24 ständig in Kontakt mit der Außenwelt. Es kann insbesondere bei einem Ablassvorgang nicht passieren, dass noch ein Luftkissen zwischen Hülle 24 und Blase 20 verbleibt. Jegliche dort eingeschlossene Luft entweicht über eine kontrollierte Leckstelle, die beispielsweise in einer Ecke, die nicht mit dem Nippel 22 ausgerüstet ist, der Hülle 24 vorgesehen ist. In einer anderen Ausführung wird auf eine derartige Leckstelle verzichtet, da die Hülle 24 ohnehin nicht vollständig luftdicht hergestellt werden kann.

Durch den zweiten Heißvulkanisierschritt werden die beiden Lagen 28, 30 unmittelbar miteinander verbunden, so dass sie eine Einheit bilden. Die zweite Form, in der der zweite Vulkanisierschritt erfolgt, bestimmt die äußere Form des fertigen Hebekissens. Der zweite Heißvulkanisierschritt wird so durchgeführt, dass das Material der Zuschnitte der beiden Lagen flüssig wird und eine möglichst gleichmäßige Dicke der Hülle 24 an allen Stellen dieser Hülle 24 vorliegt. Die Überlappungen sind dann nicht mehr sichtbar. Die Temperatur, bei der der zweite Heißvulkanisierschritt durchgeführt wird, ist mindestens 10 ºC kleiner als diejenige des ersten Heißvulkanisierschritts.

## Patentansprüche

1. Hebekissen aus in einer Presse heißvulkanisiertem, zuvor bahnförmigem Gummimaterial, das Hebekissen weist auf
- eine innenliegende Blase (20), die einen Nippel (22) hat, über den ein Innenraum der Blase (20) von außen zugänglich ist,
- eine außerhalb dieser Blase (20) befindliche und die Blase (20) eng umschließende Hülle (24) aus armiertem Gummimaterial, die Hülle (24) weist einen Durchlass für den Nippel (22) auf
**dadurch gekennzeichnet, dass** die Blase (20) in einem ersten Vulkanisierschritt hergestellt ist, dass die Hülle (24) vor einem anschließenden, zweiten Vulkanisierschritt zugefügt und in diesem zweiten Vulkanisierschritt hergestellt ist, dass sich zwischen Hülle (24) und Blase (20) ein Trennmittel (26) befindet, und dass die Hülle (24) nicht mit der Blase (20) verbunden ist.

2. Hebekissen nach Anspruch 1, **dadurch gekennzeichnet, dass** die Blase (20) rechteckförmig ist.

3. Hebekissen nach einem der vorangegangenen Ansprüche, **dadurch gekennzeichnet, dass** die Hülle (24) mindestens eine Leckstelle aufweist, so dass der Raum zwischen Hülle (24) und Blase (20) nach außen nicht luftdicht abgeschlossen ist.

4. Hebekissen nach einem der vorangegangenen Ansprüche, **dadurch gekennzeichnet, dass** die Blase (20) eine Ecke aufweist, und dass der Nippel (22) in einer Ecke der Blase (20) angeordnet ist.

5. Hebekissen nach einem der vorangegangenen Ansprüche, **dadurch gekennzeichnet, dass** der Nippel (22) nur in einem Bereich mit der Hülle (24) verbunden ist, der eine mindestens 20 mal, vorzugsweise mindestens 50 mal kleinere Fläche als die Gesamtfläche der Blase (20) hat und/oder dass die Hülle (24) nur in Nähe des Nippels (22) mit der Blase (20) verbunden ist.

6. Hebekissen nach einem der vorangegangenen Ansprüche, **dadurch gekennzeichnet, dass** die Blase (20) bei gleicher Zugkraft mindestens 1, 5-mal, vorzugsweise mindestens dreimal, insbesondere mindestens fünfmal so stark dehnt wie die Hülle (24).

7. Hebekissen nach einem der vorangegangenen Ansprüche, **dadurch gekennzeichnet, dass** die Blase (20) keine Armierung aufweist.

8. Hebekissen nach einem der vorangegangenen Ansprüche, **dadurch gekennzeichnet, dass** ein Gleitmittel zwischen Blase (20) und Hülle (24) vorgesehen ist, z.B. Talkum.

9. Hebekissen nach einem der vorangegangenen Ansprüche, **dadurch gekennzeichnet, dass** die Hülle (24) eine innere Lage (28) und eine äußere Lage (30) aufweist, dass die innere und die äußere Lage (28, 30) jeweils in einer Richtung verlaufende Armierungsfäden (34, 36) aufweisen, und dass sich die Armierungsfäden (34, 36) der inneren und der äußeren Lage (28, 30) kreuzen, insbesondere in einem Winkel von 90° zueinander verlaufen.

10. Verfahren zum Herstellen eines Hebekissens aus zuvor bahnförmigem Gummimaterial und in einer Presse durch Heißvulkanisieren, das Verfahren weist die folgenden Schritte auf:
a. Herstellen einer luftdichten Blase (20), die einen Nippel (22) aufweist, über den ein Innenraum der Blase (20) zugänglich ist, in einem ersten Heißvulkanisierschritt in einer Presse und in einer ersten Form,
b. Aufbringen eines Trennmittels (26) auf die Außenseiten der Blase (20),
c. Umhüllen der Blase (20) mit mindestens einer Lage aus armiertem Gummimaterial unter Freilassen eines Durchlasses für den Nippel (22),
d. Durchführen eines zweiten Vulkanisierschrittes in derselben oder einer anderen Presse und in einer zweiten Form zur Herstellung der Hülle (24) um die Blase (20) herum.

11. Verfahren nach Anspruch 10, **dadurch gekennzeichnet, dass** es weiterhin den folgenden Verfahrensschritt aufweist:
- Verbinden des Nippels (22) mit der Hülle (24) und/oder Verbinden der Hülle (24) in Nähe des Nippels (22) mit der Blase (20).

12. Verfahren nach Anspruch 10 oder 11, **dadurch gekennzeichnet, dass** es weiterhin den folgenden Verfahrensschritt aufweist:
- Einbringen eines Gleitmittels auf die Blase (20) vor dem Umhüllen der Blase (20) mit dem armierten Gummimaterial der zukünftigen Hülle (24).

13. Verfahren nach einem der Ansprüche 10 bis 12, **dadurch gekennzeichnet, dass** der Verfahrensschritt des Umhüllens mit armiertem Gummimaterial zwei Teilschritte aufweist, nämlich das Umhüllen mit einer inneren Lage (28) und anschließend das Umhüllen mit einer äußeren Lage (30), wobei innere und äußere Lage (28, 30) zumindest in einer Richtung verlaufende Armierungsfäden (34, 36) aufweisen und die Lagen (28, 30) so aufgebracht werden, dass sich die Armierungsfäden (34, 36) kreuzen, insbesondere im rechten Winkel schneiden.

## Claims

1. A lifting bag made of a previously web-like rubber material hot-vulcanized in a press, the lifting bag comprising
- an inside bladder (20) which has a nipple (22) through which an interior of the bladder (20) is accessible from the outside,
- a shell (24) of reinforced rubber material located outside of said bladder (20) and closely enclosing said bladder (20), said shell (24) comprising a passage for the nipple (22)
**characterized in that** the bladder (20) is produced in a first vulcanizing step, that the shell (24) is added prior to a subsequent second vulcanizing step and is produced in said second vulcanizing step, that a separating means (26) is located between the shell (24) and the bladder (20), and that the shell (24) is not connected to the bladder (20).

2. The lifting bag according to claim 1, **characterized in that** the bladder (20) is rectangular.

3. The lifting bag according to any one of the preceding claims, **characterized in that** the shell (24) has at least one leak so that the space between the shell (24) and the bladder (20) is not sealed in an airtight manner toward the outside.

4. The lifting bag according to any one of the preceding claims, **characterized in that** the bladder (20) has a corner and that the nipple (20) is arranged in a corner of the bladder (20).

5. The lifting bag according to any one of the preceding claims, **characterized in that** the nipple (22) is connected to the shell (24) only in a region which has a surface area that is at least 20 times, preferably at least 50 times smaller than the total surface area of the bladder (20), and/or that the shell (24) is connected to the bladder (20) only in the vicinity of the nipple (22).

6. The lifting bag according to any one of the preceding claims, **characterized in that** under the same tensile force, the bladder (20) expands at least 1.5 times, preferably at least three times, in particular at least five times as much as the shell (24).

7. The lifting bag according to any one of the preceding claims, **characterized in that** the bladder (20) has no reinforcement.

8. The lifting bag according to any one of the preceding claims, **characterized in that** a lubricant is provided between the bladder (20) and the shell (24), e.g. talcum.

9. The lifting bag according to any one of the preceding claims, **characterized in that** the shell (24) has an inner layer (28) and an outer layer (30), that the inner and the outer layers (28, 30) comprise reinforcement threads (34, 36) which each extend in one direction, and that the reinforcement threads (34, 36) of the inner and the outer layers (28, 30) cross, in particular extend at an angle of 90° relative to each other.

10. A method for producing a lifting bag from a previously web-like rubber material and in a press by hot vulcanizing, the method comprising the following steps:
a. producing an airtight bladder (20) which has a nipple (22) through which an interior of the bladder (20) is accessible, in a first hot-vulcanizing step in a press and in a first mold,
b. applying a separating means (26) onto the outer sides of the bladder (20),
c. wrapping the bladder (20) with at least one layer of reinforced rubber material while leaving a passage open for the nipple (22),
d. carrying out a second vulcanizing step in the same or a different press and in a second mold for producing the shell (24) around the bladder (20).

11. The method according to claim 10, **characterized in that** it further comprises the following method step:
- connecting the nipple (22) to the shell (24) and/or connecting the shell (24) to the bladder (20) in the vicinity of the nipple (22).

12. The method according to claim 10 or 11, **characterized in that** it further comprises the following method step:
- introducing a lubricant onto the bladder (20) prior to wrapping the bladder (20) with the reinforced rubber material of the future shell (24).

13. The method according to any one of the claims 10 to 12, **characterized in that** the method step of wrapping with reinforced rubber material comprises two partial steps, namely wrapping with an inner layer (28) and subsequently wrapping with an outer layer (30), wherein the inner and outer layers (28, 30) comprise reinforcement threads (34, 36) extending in at least one direction, and the layers (28, 30) are applied such that the reinforcement threads (34, 36) cross, in particular intersect at a right angle.

## Revendications

1. Coussin de levage à base de matériau en caoutchouc vulcanisé à chaud dans une presse, auparavant en forme de bande, lequel coussin de levage présente
- une vessie (20) interne, qui a un nipple (22), par lequel un espace intérieur de la vessie (20) est accessible par l'extérieur,
- une enveloppe (24) se trouvant à l'extérieur de cette vessie (20) et enveloppant étroitement la vessie (20) à base de matériau de caoutchouc armé, l'enveloppe (24) présente un passage pour le nipple (22),
**caractérisé en ce que** la vessie (20) est fabriquée dans une première étape de vulcanisation, **en ce que** l'enveloppe (24) est ajoutée avant une seconde étape de vulcanisation consécutive et est fabriquée dans cette seconde étape de vulcanisation, **en ce qu'**un agent de séparation (26) se trouve entre l'enveloppe (24) et la vessie (20), et **en ce que** l'enveloppe (24) n'est pas reliée à la vessie (20).

2. Coussin de levage selon la revendication 1, **caractérisé en ce que** la vessie (20) est de forme rectangulaire.

3. Coussin de levage selon l'une des revendications précédentes, **caractérisé en ce que** l'enveloppe (24) présente au moins un point de fuite, de sorte que l'espace entre l'enveloppe (24) et la vessie (20) n'est pas étanche à l'air vers l'extérieur.

4. Coussin de levage selon l'une des revendications précédentes, **caractérisé en ce que** la vessie (20) présente un coin, et **en ce que** le nipple (22) est disposé dans un coin de la vessie (20).

5. Coussin de levage selon l'une des revendications précédentes, **caractérisé en ce que** le nipple (22) est relié à l'enveloppe (24) seulement dans une zone, qui a une surface au moins 20 fois, de préférence au moins 50 fois plus petite que la surface globale de la vessie (20) et/ou **en ce que** l'enveloppe (24) n'est reliée à la vessie (20) qu'à proximité du nipple (22).

6. Coussin de levage selon l'une des revendications précédentes, **caractérisé en ce que** la vessie (20) se déforme, pour une même force de traction, au moins 1,5 fois, de préférence au moins trois fois, en particulier au moins cinq fois autant que l'enveloppe (24).

7. Coussin de levage selon l'une des revendications précédentes, **caractérisé en ce que** la vessie (20) ne présente pas d'armure.

8. Coussin de levage selon l'une des revendications précédentes, **caractérisé en ce qu'**un agent de glissement est prévu entre la vessie (20) et l'enveloppe (24), par exemple du talc.

9. Coussin de levage selon l'une des revendications précédentes, **caractérisé en ce que** l'enveloppe (24) présente une couche interne (28) et une couche externe (30), **en ce que** la couche interne et la couche externe (28, 30) présentent à chaque fois des fils d'armure (34, 36) agencés dans une direction, et **en ce que** les fils d'armure (34, 36) de la couche interne et de la couche externe (28, 30) se croisent, en particulier sont agencés en formant un angle de 90°.

10. Procédé pour fabriquer un coussin de levage à base de matériau de caoutchouc auparavant en forme de bande et dans une presse par vulcanisation à chaud, le procédé présente les étapes suivantes :
a. fabrication d'une vessie (20) étanche à l'air, qui présente un nipple (22), par lequel un espace intérieur de la vessie (20) est accessible, dans une première étape de vulcanisation à chaud dans une presse et dans une première forme,
b. application d'un agent de séparation (26) sur les côtés extérieurs de la vessie (20),
c. enveloppement de la vessie (20) avec au moins une couche à base de matériau de caoutchouc armé en laissant libre un passage pour le nipple (22),
d. mise en oeuvre d'une seconde étape de vulcanisation dans la même presse ou une autre presse et dans une seconde forme pour la fabrication de l'enveloppe (24) autour de la vessie (20).

11. Procédé selon la revendication 10, **caractérisé en ce qu'**il présente également l'étape de procédé suivante :
- liaison du nipple (22) avec l'enveloppe (24) et/ou liaison de l'enveloppe (24) à proximité du nipple (22) avec la vessie (20).

12. Procédé selon la revendication 10 ou 11, **caractérisé en ce qu'**il présente également l'étape de procédé suivante :
- introduction d'un agent de glissement sur la vessie (20) avant l'enveloppement de la vessie (20) avec le matériau de caoutchouc armé de la future enveloppe (24).

13. Procédé selon l'une des revendications 10 à 12, **caractérisé en ce que** l'étape de procédé de l'enveloppe avec du matériau de caoutchouc armé présente deux étapes partielles, à savoir l'enveloppement avec une couche interne (28) et ensuite l'enveloppement avec une couche externe (30), la couche interne et la couche externe (28, 30) présentant des fils d'armure (34, 36) agencés au moins dans une direction et les couches (28, 30) sont appliquées, de telle sorte que les fils d'armure (34, 36) se croisent, en particulier se coupent à angle droit.
